# EUROPÄISCHE PATENTANMELDUNG

(11) **EP 1 657 691 A1**
(43) Veröffentlichungstag der Anmeldung: **17.05.2006**
(21) Anmeldenummer: 04292702.0
(22) Anmeldetag: 15.11.2004
(51) Int. Cl.: G08G 1/01

(54) **Verfahren und System zur Ermittlung von Verkehrsinformationen**

(71) Anmelder: ALCATEL, 75008 Paris (FR)
(72) Erfinder: Hägebarth, Frank, 74366 Kirchheim am Neckar (DE)
(74) Vertreter: Kohler Schmid Möbus

(57) **Zusammenfassung**

Bei einem Verfahren zur Ermittlung von Verkehrsinformationen zumindest bezüglich eines Streckenabschnitts eines Straßennetzes, übermitteln mehrere entlang des Streckenabschnitts bewegbare Geräte (2 - 4), die sich in oder an Fahrzeugen befinden, die jeweilige Fahrzeugbewegung entlang des Streckenabschnitts betreffende Informationen an einen oder mehrere zentrale Server (6), wo die Informationen verarbeitet und/oder gespeichert werden und aus gespeicherten und/oder aktuellen Informationen den Streckenabschnitt betreffende statistische Daten ermittelt werden. Mit den statistischen Daten können Fahrzeitberechnungen genauer durchgeführt werden und Staumeldungen zuverlässiger generiert werden.

## Beschreibung

### Stand der Technik

Die Erfindung betrifft ein Verfahren zur Ermittlung von Verkehrsinformationen zumindest bezüglich eines Streckenabschnitts eines Straßennetzes.

Klassische Navigationssysteme verwenden zur Wegesuche Straßenkarten, die im Navigationsgerät selbst gespeichert sind. Üblicherweise werden die Daten der Straßenkarte auf einem Datenträger, z.B. CD-ROM oder DVD, zur Verfügung gestellt und über diesen Datenträger in das Navigationssystem eingebracht.

Da Straßenkarten sehr schnell veralten, ist bei diesem Verfahren ein ständiger Austausch der Datenträger erforderlich. Des Weiteren ist die Einbeziehung der aktuellen Verkehrssituation in die Wegesuche problematisch.

Aus diesem Grund wurden so genannte Off Board Navigationssysteme entwickelt. Bei diesen werden die Straßenkarten zentral bereitgestellt. Die Navigationsendgeräte in den Fahrzeugen kommunizieren über ein Mobilfunknetz, z.B. UMTS, mit einem zentralen Server. Dadurch ist das Herunterladen eines aktuellen Kartenausschnittes für die momentane Position des Fahrzeugs, die durch ein Satellitennavigationssystem, wie GPS, im Fahrzeug ermittelt wird, möglich. Die Berechnung der Route kann auch zentral auf einem entsprechenden Server erfolgen, der lediglich Informationen zur Unterstützung des Fahrers an das Navigationsendgerät sendet.

Da sich die Verkehrssituation dynamisch ändert, besitzt dieses Verfahren zur Vorausberechnung der Fahrzeit nur eine geringe Genauigkeit. Deshalb werden verkehrsabhängige dynamische Daten (z.B. Stauinformationen) in die Berechnung einbezogen. Diese werden z.B. durch Radiosender ausgestrahlt oder per Mobilfunk an das Navigationssystem übermittelt und von diesem ausgewertet und in die Fahrzeitberechnung einbezogen.

Die Überwachung des Verkehrsflusses erfolgt derzeit im Wesentlichen durch Sensoren an Autobahnen und Verkehrsknotenpunkten, sowie durch die Polizei, z.B. mit Hubschraubern. Diese, oft manuell weiterbearbeiteten, Informationen dienen letztlich auch zur Erstellung von Staumeldungen, die oft zeitversetzt über Radiostationen gesendet werden. Häufig ist eine zeitnahe Erfassung der aktuellen Verkehrssituation nur auf Autobahnen und stark frequentierten Straßen gegeben.

### Aufgabe der Erfindung

Aufgabe der vorliegenden Erfindung ist es, ein Verfahren und ein System zu schaffen, mit denen Verkehrssituationen genauer erfasst werden können, so dass eine genauere Fahrzeitberechnung ermöglicht wird und zuverlässigere Stauinformationen generiert werden können.

### Gegenstand der Erfindung

Gelöst wird diese Aufgabe durch ein Verfahren der eingangs genannten Art, bei dem mehrere entlang des Streckenabschnitts bewegbare Geräte, die sich in oder an Fahrzeugen befinden, die jeweilige Fahrzeugbewegung entlang des Streckenabschnitts betreffende Informationen an einen oder mehrere zentrale Server übermitteln, wo die Informationen verarbeitet und/oder gespeichert werden und aus gespeicherten und/oder aktuellen Informationen den Streckenabschnitt betreffende statistische Daten ermittelt werden. Die gespeicherten Informationen können auch gespeicherte statistische Daten sein. Als bewegbare Geräte, die in oder an den Fahrzeugen angeordnet sind, kommen insbesondere Navigationsendgeräte von Off Board Navigationssystemen in Betracht. Dies bedeutet, dass die Navigationsendgeräte bzw. die Fahrzeuge, in oder an denen die Navigationsendgeräte angeordnet sind, als Sensoren genutzt werden. Je mehr Fahrzeuge mit einem Navigationsendgerät ausgestattet sind, desto genauer sind die statistischen Daten, die ermittelt werden. Anhand dieser statistischen Daten können genauere Fahrzeitprognosen für eine zurückzulegende Strecke und aktuellere Staumeldungen generiert werden. Erfindungsgemäß sammelt der zentrale Server also zusätzlich zu seinen üblichen Aufgaben Daten, die von den Navigationsendgeräten aus den Fahrzeugen übermittelt wurden und wertet diese statistisch aus.

Vorteilhafterweise werden die Durchschnittsgeschwindigkeiten in dem Streckenabschnitt für mehrere Fahrzeuge ermittelt (und gespeichert) und wird aus den Durchschnittsgeschwindigkeiten der Fahrzeuge eine aktuelle gemittelte Durchschnittsgeschwindigkeit für den Streckenabschnitt ermittelt. Dabei ist es möglich, die Durchschnittsgeschwindigkeit in jedem Navigationsendgerät zu ermitteln und die Durchschnittsgeschwindigkeit an den Server zu senden. Alternativ ist es möglich, den aktuellen Standort des Fahrzeugs zu übermitteln, so dass der zentrale Server in Verbindung mit der aktuellen Zeit seibstständig die Durchschnittsgeschwindigkeit des Fahrzeugs berechnen kann.

Bei einer bevorzugten Verfahrensvariante kann vorgesehen sein, dass die den Streckenabschnitt betreffenden statistischen Informationen bei der Berechnung einer voraussichtlichen Fahrzeit für eine Strecke, die den Streckenabschnitt aufweist, berücksichtigt werden. Die auf dem zentralen Server verfügbaren Statistikdaten können den Navigationsendgeräten in den Fahrzeugen zur Verfügung gestellt werden. Die Berechnung der Fahrzeit kann entweder direkt im Navigationsendgerät (im Fahrzeug) oder auf einem zentralen Server erfolgen, wobei Teilberechnungen auf dem jeweils anderen System möglich sind.

Die Genauigkeit einer Fahrzeitberechnung kann erhöht werden, wenn Daten über das aktuelle Fahrverhalten und/oder statistische Daten über das Fahrverhalten eines Fahrers eines Fahrzeugs, in oder an dem das Navigationsendgerät angeordnet ist, ermittelt werden und bei der Berechnung einer voraussichtlichen Fahrzeit für eine Strecke, die den Streckenabschnitt aufweist, berücksichtigt werden. Die Navigationsendgeräte in den Fahrzeugen erfassen das Fahrverhalten des Fahrers und legen ihrerseits Statistikdaten über den Fahrer an. Dabei ist die Verwaltung der Daten mehrerer Fahrer möglich. Die personenbezogenen Statistikdaten werden vorzugsweise im Navigationsendgerät des Fahrzeugs gespeichert. Damit wird ein besserer Datenschutz erreicht. Alternativ ist jedoch auch die zentrale Speicherung dieser Daten möglich.

Besonders bevorzugt ist es, wenn die statistischen Daten für vorgebbare Zeitspannen und/oder nach Wochentagen klassifiziert bestimmt werden.

Streckenabschnitte werden zu unterschiedlichen Zeiten und an unterschiedlichen Wochentagen unterschiedlich stark befahren. Demnach ergeben sich je nach Zeit und Wochentag unterschiedliche Durchschnittsgeschwindigkeiten. Wenn die gemittelten Durchschnittsgeschwindigkeiten - und damit die statistischen Informationen - demnach klassifiziert nach Zeit und Wochentag erfasst und gespeichert werden, kann auf Grund dieser Informationen eine genauere Vorhersage für eine benötigte Fahrzeit getroffen werden.

Insbesondere kann dabei vorgesehen sein, dass bei der Fahrzeitberechnung für eine Strecke, die mehrere Streckenabschnitte umfasst, zunächst bestimmt wird, wann die Streckenabschnitte voraussichtlich erreicht werden und die statistischen Daten für die Zeiten, zu denen die Streckenabschnitte voraussichtlich befahren werden, bei der Berechnung der voraussichtlichen Fahrzeit berücksichtigt werden. Die Berechnung der voraussichtlichen Fahrzeit kann also insbesondere unter Einbeziehung folgender Daten erfolgen:
a) statistischer Daten über das Fahrverhalten des Fahrers (personenbezogen, z.B. übliche Abweichung von einer gemittelten Durchschnittsgeschwindigkeit)
b) Daten über das aktuelle Fahrverhalten des Fahrers (personenbezogen, z.B. aktuelle Abweichung von der aktuellen gemittelten Durchschnittsgeschwindigkeit)
c) statistischer Daten des Straßennetzes (übliche Verkehrssituation, z.B. gemittelte Durchschnittsgeschwindigkeit auf bestimmten Streckenabschnitten zu bestimmten Zeiten an bestimmten Wochentagen)
d) aktueller Daten des Straßennetzes (aktuelle Verkehrssituation, z.B. aktuelle gemittelte Durchschnittsgeschwindigkeit).

Vorzugsweise sind die unter a) und b) genannten Daten im Navigationsendgerät im Fahrzeug und die unter c) und d) genannten Daten auf dem zentralen Server gespeichert und werden vom System, auf dem Fahrzeitberechnung erfolgt, angefordert und vom anderen System entsprechend bereitgestellt. Mit dem erfindungsgemäßen Verfahren ist somit eine präzisere Vorhersage über die zu erwartende Fahrzeit einer Strecke zu erzielen. Hierdurch kann die Wahl der zu befahrenden Route verbessert werden.

Bei einer vorteilhaften Verfahrensvariante, die auch als eigenständige Erfindung gesehen wird, wird überwacht, ob die für einen Streckenabschnitt ermittelte aktuelle gemittelte Durchschnittsgeschwindigkeit unter einen vorgebbaren Schwellenwert sinkt oder eine für den Streckenabschnitt typische Durchschnittsgeschwindigkeit um einen vorgebbaren Wert unterschreitet. In diesem Fall wird eine Stauinformation generiert. Bei dem Schwellenwert kann es sich beispielsweise um einen festen Schwellenwert handeln, der z.B. vom Straßentyp (Autobahn, Landstraße, Ortschaft, etc.) abhängig ist. Wenn als Kriterium das Unterschreiten einer üblicherweise auf dem betreffenden Straßenabschnitt gefahrenen Durchschnittsgeschwindigkeit gewählt wird, wobei es sich bei der maximalen Unterschreitung um eine prozentuale Unterschreitung der üblicherweise auf dem betreffenden Streckenabschnitt gefahrenen Durchschnittsgeschwindigkeit handeln kann, ist es notwendig, dass für jeden Streckenabschnitt eine üblicherweise gefahrene Geschwindigkeit, d.h. eine Durchschnittsgeschwindigkeit, gespeichert ist und in gewissen Abständen aktualisiert wird. Es ist ebenso denkbar, für jeden Streckenabschnitt mehrere Durchschnittsgeschwindigkeiten zu speichern, die nach Uhrzeit und/oder Wochentag klassifiziert gespeichert sind.

Bei einer alternativen Verfahrensvariante kann vorgesehen sein, dass die zeitliche Änderung der aktuellen gemittelten Durchschnittsgeschwindigkeit ermittelt wird und bei Überschreiten eines Änderungsschwellenwertes Unfallfolgemaßnahmen eingeleitet werden. Insbesondere bei einer Änderung der Durchschnittsgeschwindigkeit von einer relativ hohen zu einer relativ niedrigen Geschwindigkeit besteht ein Verdacht auf einen Verkehrsunfall. Dieser Verdacht kann durch Auswertung zusätzlicher Daten in einem solchen Fall erhärtet werden. So kann bei Autobahnen beispielsweise eine mögliche Veränderung der Durchschnittsgeschwindigkeit auf der Gegenrichtung ausgewertet werden. Ist hier zeitnah ebenfalls eine Reduzierung festzustellen, kann auf "Gaffer" geschlussfolgert werden, was den Verdacht eines Unfalles erhärtet. Wird ein möglicher Unfall erkannt, kann in geeigneter Weise ein entsprechender Alarm an die zuständigen Rettungskräfte und die Polizei abgesetzt werden, die eine weitere Untersuchung des betroffenen Streckenabschnittes durchführen können.

Besonders bevorzugt ist es, wenn die Stauinformation als Verkehrsinformation auf einer Web-Seite angezeigt wird und die Web-Seite erzeugt oder geändert wird, wenn eine Stauinformation generiert wird. Auf dieser Web-Seite ist die Stauinformation visualisiert abrufbar. Diese Web-Seite kann beispielsweise eine Straßenkarte für ein bestimmtes Gebiet zeigen, auf der alle Streckenabschnitte, deren Schwellenwert unterschritten ist, entsprechend gekennzeichnet sind. Ebenso könnten weitere Informationen zu den einzelnen Streckenabschnitten verfügbar sein, wie beispielsweise die aktuelle (gemittelte) Durchschnittsgeschwindigkeit, die übliche (gemittelte) Durchschnittsgeschwindigkeit oder auch die aktuelle Tendenz der Entwicklung der (gemittelten) Durchschnittsgeschwindigkeit. Dies kann durch die Auswertung der zuletzt ermittelten und gespeicherten Werte erfolgen. Das Betrachten dieser Web-Seite könnte gebührenpflichtig sein. Mögliche Kunden eines derartigen Dienstes könnten sowohl die Verkehrsredaktionen von Rundfunkstationen als auch Speditionen, Busunternehmen, Taxizentralen oder auch Privatpersonen sein.

In den Rahmen der Erfindung fällt außerdem ein System, umfassend mehrere Geräte, insbesondere Off Board Navigationsendgeräte, die über ein Mobilfunknetz mit einem oder mehreren Servern in Kommunikationsverbindung stehen, wobei der oder die Server eine Auswerteinheit zur Ermittlung statistischer Daten betreffend einen Streckenabschnitt eines Straßennetzes umfassen. Die Endgeräte sind dabei vorzugsweise in Fahrzeugen angeordnet. Vorteilhafterweise kommen die für Off Board Navigationssysteme verwendeten Endgeräte zum Einsatz. Diese können durch einfache Maßnahmen so angepasst werden, dass sie in dem erfindungsgemäßen System zur Durchführung des erfindungsgemäßen Verfahrens verwendet werden können. Sie erfahren somit eine Mehrfachnutzung.

Das Mobilfunknetz dient der Übermittlung von Daten zwischen den Endgeräten in den Fahrzeugen und einem zentralen Server. Als Mobilfunknetz kann beispielsweise ein UMTS-Netz vorgesehen sein. Die Position der Fahrzeuge kann über ein Satellitennavigationssystem in den Fahrzeugen bestimmt werden, beispielsweise über GPS oder Galileo. Die Navigationsendgeräte in den Fahrzeugen senden in gewissen Zeitintervallen die Geschwindigkeit des Fahrzeuges und die aktuelle Position über das Mobilfunknetz an den zentralen Server. Dazu wird in den Fahrzeugen über das Satellitennavigationssystem bzw. einen Empfänger des Satellitennavigationssystems die Position in gewissen Zeitabständen ermittelt und aus der Positionsänderung und der vergangenen Zeit die Geschwindigkeit berechnet. Alternativ kann die Geschwindigkeit durch eine Kopplung des Navigationsendgerätes mit der Bordelektronik des Fahrzeugs gewonnen werden.

Die Auswerteeinheit des oder der zentralen Server ermittelt die gemittelten Durchschnittsgeschwindigkeiten auf den Streckenabschnitten des Straßennetzes auf Basis der von den Navigationsendgeräten aus den Fahrzeugen ermittelten Werte. Die Berechnung der gemittelten Durchschnittsgeschwindigkeiten der Streckenabschnitte erfolgt in gewissen Abständen, wobei eine Anzahl an gemittelten Durchschnittsgeschwindigkeiten für jeden Streckenabschnitt in der Datenbank gespeichert wird. Beispielsweise können die letzten zehn gemittelten Durchschnittsgeschwindigkeiten mit der jeweils zugehörigen Uhrzeit gespeichert werden.

Die Qualität der gelieferten Daten, insbesondere der statistischen Daten und der Staumeldungen sowie von Unfallmeldungen ist von der Anzahl der aktiven Sensoren abhängig. Die Sensoren sind letztlich die Fahrzeuge mit einem Navigationssystem, welches das beschriebene Verfahren unterstützt. Es kann eine bereits bestehende Infrastruktur für Off Board Navigationssysteme genutzt werden. Deshalb könnte die Unterstützung für das beschriebene Verfahren in nahezu jedes neue Off Board Navigationsendgerät impfementiert werden, was mittelfristig zu einer äußerst hohen Anzahl an aktiven Sensoren führt. Da sich die Sensoren frei im Streckennetz bewegen, ist auch die Überwachung von Nebenstrecken gewährleistet, was beim Einsatz fest montierter Sensoren am Straßenrand kaum möglich ist.

Bei einer Weiterbildung kann vorgesehen sein, dass der oder die zentralen Server über ein Kommunikationsnetz mit einem Web-Server in Verbindung stehen, über den Staumeldungen in Form von Web-Seiten abrufbar sind. Von dem Web-Server können aktuelle, automatisch generierte Staumeldungen in Form von Web-Sites abgerufen werden. Das Internet kann zur Verbindung der Nutzer mit dem Web-Service dienen. Weiterhin können Einrichtungen vorgesehen sein, die zur Abfrage und Visualisierung der Daten der Web-Server dienen. Diese Einrichtungen sind vorzugsweise PCs mit Web-Browser.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ausführungsbeispiele des erfindungsgemäßen Verfahrens und des erfindungsgemäßen Systems sind nachfolgend anhand der Figuren der Zeichnung erläutert. Dabei zeigen:
- **Fig. 1**: eine äußerst schematische Darstellung eines Systems zur Ermittlung von Verkehrsinformationen;
- **Fig. 2**: ein Ablaufdiagramm zur Darstellung eines Ausführungsbeispiels des erfindungsgemäßen Verfahrens.

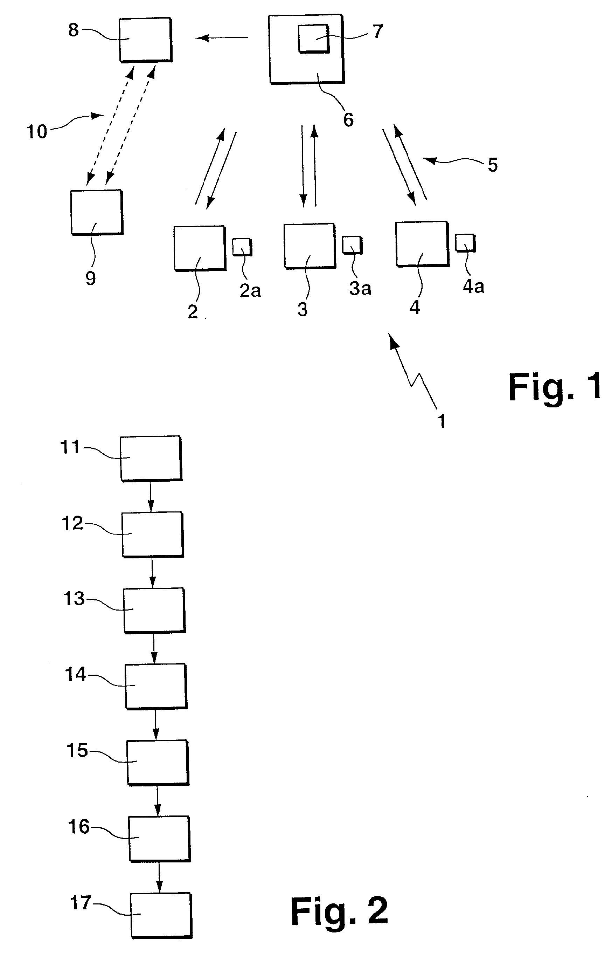

In der **Fig. 1** ist ein System 1 zur Ermittlung von Verkehrsinformationen dargestellt, das mehrere Endgeräte 2 bis 4 umfasst. Die Endgeräte 2 bis 4 sind als Off Board Navigationsendgeräte ausgebildet, die zusammen mit einem Satellitennavigationssystemempfänger 2a - 4a in einem Fahrzeug angeordnet sind. Sie kommunizieren über ein Mobilfunknetz 5, welches durch Doppelpfeile dargestellt ist, mit einem Server 6. Der Server 6 weist eine Auswerteeinheit 7 zur Ermittlung statistischer Daten betreffend einen Streckenabschnitt eines Straßennetzes auf, wobei die den Streckenabschnitt betreffenden Daten von den Navigationsendgeräten 2 bis 4 an den Server 6 übermittelt werden. Die statistischen Informationen können wiederum an die Endgeräte 2 bis 4 übermittelt werden, so dass unter Verwendung der statistischen Informationen, insbesondere aktueller gemittelter Durchschnittsgeschwindigkeiten eines Streckenabschnitts und typischen Durchschnittsgeschwindigkeiten eines Streckenabschnitts Fahrzeitberechnungen durchgeführt werden können. Die statistischen Informationen können weiterhin verwendet werden, um das Vorliegen eines Staus oder eines Unfalls zu detektieren. Wird auf Grund der statistischen Informationen ein Stau detektiert, kann eine Staumeldung generiert werden, die von einem Web-Server 8 angezeigt wird. Dazu steht der Server 6 mit dem Web-Server 8 in Verbindung. Diese Information kann durch Benutzer über ein Endgerät 9 über das Internet 10 abgerufen werden.

In der **Fig. 2** ist ein Ablaufdiagramm für die Vorausberechnung der erwarteten Fahrzeit einer Strecke, die mehrere Streckenabschnitte umfasst, dargestellt. Im Schritt 11 wird durch Off Board Navigationsendgeräte in den Fahrzeugen die aktuell gefahrene Durchschnittsgeschwindigkeit für jeden absolvierten Streckenabschnitt ermittelt und wird diese an den zentralen Server gesendet.

Im Schritt 12 werden den auf dem zentralen Server bereitgestellten Daten der Straßenkarten für jeden Streckenabschnitt folgende zusätzliche Daten zugeordnet:
1. die aktuell gefahrene Durchschnittsgeschwindigkeit, die durch Mittelung der Durchschnittsgeschwindigkeiten der einzelnen Fahrzeuge für diesen Streckenabschnitt gewonnen wurde;
2. die gemittelten Durchschnittsgeschwindigkeiten, die zu verschiedenen Uhrzeiten (Zeitbereiche) z.B. für jede Stunde, oder längere Zeiträume in verkehrsschwachen Zeiten oder kürzere Zeiträume in verkehrsstarken Zeiten) an verschiedenen Wochentagen (z.B. Unterscheidung zwischen werktags, Samstag, Sonntag, Feiertag) auf diesem Streckenabschnitt gefahren werden ( = übliche Durchschnittsgeschwindigkeit).

Im Schritt 13 vergleicht der zentrale Server die übermittelte Durchschnittsgeschwindigkeit eines Fahrzeugs mit der für diesen Streckenabschnitt gespeicherten aktuellen gemittelten Durchschnittsgeschwindigkeit. Es wird eine neue aktuelle gemittelte Durchschnittsgeschwindigkeit ermittelt und der gespeicherte Wert für die aktuelle gemittelte Durchschnittsgeschwindigkeit wird durch diesen ausgetauscht.

Im Schritt 14 wird bei Beginn eines neuen Zeitbereichs eine neue gemittelte Durchschnittsgeschwindigkeit für den soeben beendeten Zeitbereich des betreffenden Wochentags für jeden Streckenabschnitt des Straßennetzes berechnet und wird der gespeicherte Wert ausgetauscht. Der neu gespeicherte Wert wird als das Mittel aus dem gespeicherten Durchschnittswert und dem aktuellen Durchschnittswert gebildet. Die Mittelung findet statt, falls die aktuell ermittelte Durchschnittsgeschwindigkeit für diesen Streckenabschnitt untypisch ist. Dies ist beispielsweise der Fall, wenn auf dem Streckenabschnitt ein Unfall oder Stau war.

Im Schritt 15 empfangen die Navigationsendgeräte für einen absolvierten Streckenabschnitt auch die auf dem Server gespeicherte aktuelle gemittelte Durchschnittsgeschwindigkeit. Sie vergleichen die aktuelle gemittelte Durchschnittsgeschwindigkeit mit der für das Fahrzeug ermittelten Durchschnittsgeschwindigkeit und berechnen eine prozentuale Abweichung der eigenen aktuellen Durchschnittsgeschwindigkeit von der gemittelten aktuellen Durchschnittsgeschwindigkeit. Ein Wert von +8% bedeutet beispielsweise, dass das Fahrzeug 8% schneller gefahren ist als der Durchschnitt auf diesem Streckenabschnitt.

Im Schritt 16 wird der im Schritt 15 ermittelte Wert, d.h. die prozentuale Abweichung der eigenen Durchschnittsgeschwindigkeit von der gemittelten aktuellen Durchschnittsgeschwindigkeit mit einer durchschnittlichen prozentualen Abweichung der eigenen Durchschnittsgeschwindigkeit von der auf dem Server gespeicherten gemittelten aktuellen Durchschnittsgeschwindigkeit verglichen. Diese durchschnittliche prozentuale Abweichung ist in den Navigationsendgeräten gespeichert. Ein gespeicherter Wert von +4% bedeutet, dass das Fahrzeug üblicherweise 4% schneller als der durchschnittliche Verkehr fährt (z.B. durch Überholmanöver). Aus dem Vergleich der Werte wird ein neuer Durchschnittswert für das Fahrzeug berechnet und der gespeicherte Wert wird gegen diesen ausgetauscht. Die Berechnung dieses Wertes erfolgt nach Absolvierung jedes Streckenabschnitts. Die prozentuale Abweichung enthält eine Information über das Fahrverhalten des Fahrers des Fahrzeugs. Aus dieser Information kann ein Korrekturfaktor ermittelt werden. Ist dieser Wert beispielsweise bei +4%, bedeutet dies, dass der Fahrer normalerweise 4% schneller fährt als der durchschnittliche Verkehr. Dies kann bei der Berechnung der Fahrzeit berücksichtigt werden. Dieser Korrekturfaktor ändert sich, wenn sich das Fahrverhalten ändert. Deshalb muss er, wie dies im Schritt 16 beschrieben ist, aktuell gehalten werden.

Im Schritt 17 erfolgt die Berechnung der voraussichtlichen Fahrzeit. Die Berechnung erfolgt nach Eingabe des Zielortes. Vorher berechnet das Navigationsendgerät (unter Einbeziehung von Daten des zentralen Servers) oder der zentrale Server die Streckenführung und damit die Streckenabschnitte, die befahren werden. Nach Absolvierung eines Streckenabschnittes, einer Anzahl von Streckenabschnitten, einer gewissen Zeit oder einer gewissen Distanz erfolgt automatisch eine Neuberechnung und Aktualisierung der voraussichtlichen Fahrzeit. Die eigentliche Berechnung der voraussichtlichen Fahrzeit erfolgt in den folgenden Schritten:
a) das Navigationsendgerät fragt einmalig vom zentralen Server die aktuellen gemittelten Durchschnittsgeschwindigkeiten für alle zu absolvierenden Streckenabschnitte ab;
b) das Navigationsendgerät berechnet aus den unter a) ermittelten Werten grob, zu welchen Zeiten die einzelnen Streckenabschnitte absolviert werden;
c) das Navigationsendgerät fragt vom zentralen Server die Statistikdaten der einzelnen Streckenabschnitte für die Zeiten, zu denen die Streckenabschnitte voraussichtlich absolviert werden, ab;
d) mit den unter c) erhaltenen Werten berechnet das Navigationsendgerät die voraussichtliche Fahrzeit;
e) aus den personenbezogenen Daten des Fahrers (statistisches und aktuelles Fahrverhalten) berechnet das Navigationsendgerät einen Korrekturfaktor und damit eine neue voraussichtliche Fahrzeit;
f) in gewissen Abständen oder bei Änderung der Route auf Grund eines Staus erfolgt während der Fahrt eine Neuberechnung der Fahrzeit für die verbleibenden Streckenabschnitte.

Die beschriebene Berechnung der voraussichtlichen Fahrzeit kann nacheinander für mehrere alternative Routen erfolgen. Anschließend kann automatisch oder manuell die günstigste Route gewählt werden.

Es kann vorgesehen sein, dass verschiedene Profile für verschiedene Fahrer im Navigationsendgerät gespeichert werden. Dazu kann das Navigationsendgerät eine geeignete Einrichtung, über die sich der Fahrer anmelden kann, aufweisen. So könnte das Navigationsendgerät zum Beispiel mehrere Tasten besitzen, die jeweils einem Fahrer zugeordnet sind. Der Fahrer kann zu Beginn der Fahrt seine Taste betätigen. Damit aktiviert er sein Profil. Das Profil stellt den Wert für die durchschnittliche prozentuale Abweichung der eigenen Durchschnittsgeschwindigkeit von der auf den Server gespeicherten Durchschnittsgeschwindigkeit dar.

## Patentansprüche

1. Verfahren zur Ermittlung von Verkehrsinformationen zumindest bezüglich eines Streckenabschnitts eines Straßennetzes, bei dem mehrere entlang des Streckenabschnitts bewegbare Geräte (2 - 4), die sich an oder in den Fahrzeugen befinden, Informationen über die jeweilige Fahrzeugbewegung entlang des Streckenabschnitts sammeln und diese an einen oder mehrere zentrale Server (6) übermitteln, wo die Informationen verarbeitet und/oder gespeichert werden und aus gespeicherten und/oder aktuellen Informationen den Streckenabschnitt betreffende statistische Daten ermittelt werden.

2. Verfahren nach Anspruch 1, **dadurch gekennzeichnet, dass** die Durchschnittsgeschwindigkeit in dem Streckenabschnitt für mehrere Fahrzeuge ermittelt wird und aus den Durchschnittsgeschwindigkeiten der Fahrzeuge eine aktuelle gemittelte Durchschnittsgeschwindigkeit für den Streckenabschnitt ermittelt wird.

3. Verfahren nach Anspruch 1, **dadurch gekennzeichnet, dass** die den Streckenabschnitt betreffenden statistischen Informationen bei der Berechnung einer voraussichtlichen Fahrzeit für eine Strecke, die den Streckenabschnitt aufweist, berücksichtigt werden.

4. Verfahren nach Anspruch 1, **dadurch gekennzeichnet, dass** Daten über das aktuelle Fahrverhalten und/oder statistische Daten über das Fahrverhalten eines Fahrers eines Fahrzeugs, in oder an dem ein Gerät angeordnet ist, ermittelt werden und bei der Berechnung einer voraussichtlichen Fahrzeit für eine Strecke, die den Streckenabschnitt aufweist, berücksichtigt werden.

5. Verfahren nach Anspruch 1, **dadurch gekennzeichnet, dass** die statistischen Daten für vorgebbare Zeitspannen und/oder nach Wochentagen klassifiziert bestimmt werden.

6. Verfahren nach Anspruch 1, **dadurch gekennzeichnet, dass** bei der Fahrzeitberechnung für eine Strecke, die mehrere Streckenabschnitte umfasst, zunächst bestimmt wird, wann die Streckenabschnitte voraussichtlich erreicht werden und die statistischen Daten für die Zeiten, zu denen die Streckenabschnitte voraussichtlich befahren werden, bei der Berechnung der voraussichtlichen Fahrzeit berücksichtigt werden.

7. Verfahren nach Anspruch 2, **dadurch gekennzeichnet, dass** überwacht wird, ob die für einen Streckenabschnitt ermittelte aktuelle gemittelte Durchschnittsgeschwindigkeit unter einen vorgebbaren Schwellenwert sinkt oder eine für den Streckenabschnitt typische Durchschnittsgeschwindigkeit um einen vorgebbaren Wert unterschreitet und in diesem Fall eine Stauinformation generiert wird.

8. Verfahren nach Anspruch 2, **dadurch gekennzeichnet, dass** die zeitliche Änderung der aktuellen gemittelten Durchschnittsgeschwindigkeit ermittelt wird und bei Überschreiten eines Änderungsschwellenwerts Unfallfolgemaßnahmen eingeleitet werden.

9. Verfahren nach Anspruch 7, **dadurch gekennzeichnet, dass** die Stauinformation auf einer Webseite angezeigt wird und die Webseite erzeugt oder geändert wird, wenn eine Stauinformation generiert wird.

10. System (1) umfassend mehrere Geräte (2 - 4), insbesondere Off Board Navigationsendgeräte, die über ein Mobilfunknetz (5) mit einem oder mehreren Servern (6) in Kommunikationsverbindung stehen, **dadurch gekennzeichnet, dass** der oder die Server (6) eine Auswerteeinheit (7) zur Ermittlung statistischer Daten betreffend einen Streckenabschnitt eines Straßennetzes umfassen.

11. System nach Anspruch 10, **dadurch gekennzeichnet, dass** der oder die zentralen Server (6) über ein Kommunikationsnetz mit einem Web-Server (8) in Verbindung stehen, über den Staumeldungen in Form von Web-Seiten abrufbar sind.
